# EUROPEAN PATENT SPECIFICATION

(11) **EP 1 990 264 B1**
(45) Date of publication and mention of the grant of the patent: **26.08.2015**
(21) Application number: 08153555.1
(22) Date of filing: 28.03.2008
(51) Int. Cl.: B62J 35/00, B62J 37/00

(54) **Fuel supply structure for small-type vehicle**
Kraftstoffversorgungsstruktur für ein kleines Fahrzeug
Structure d'alimentation de carburant pour véhicule de petite taille

(30) Priority: 11.05.2007 JP 2007127341; 11.05.2007 JP 2007127340; 11.05.2007 JP 2007127343
(43) Date of publication of application: 12.11.2008
(73) Proprietor: Honda Motor Co., Ltd., Tokyo 107-8556 (JP)
(72) Inventor: Honda, Koichiro, Saitama 351-0193 (JP); Morikawa, Yuichiro, Saitama 351-0193 (JP); Narazaki, Yasuo, Saitama 351-0193 (JP); Kawame, Kazunori, Saitama 351-0193 (JP); Akiyama, Hideki, Saitama 351-0193 (JP)
(74) Representative: Rupp, Christian

(56) References cited:
- JP-A- 6 008 864
- JP-A- 62 155 182
- JP-A- 2003 237 663
- JP-A- 2006 027 436
- US-A1- 2004 021 315

## Description

The present invention relates to a small-type vehicle in which a body frame includes a head pipe for steerably supporting a steering handle and a front fork, and a hollow main pipe extending rearwardly downwards from the head pipe and forming a fuel passage at least at a part thereof, wherein an oil supply pipe for supplying a fuel into the fuel passage is connected to the main pipe, and a fuel tank supplied with the fuel from the oil supply pipe through the fuel passage is connected to a lower part of the main pipe. Particularly, the present invention relates to an improvement for the fuel oil supply structure.

A motor scooter type motorcycle in which the inside of a main pipe connecting a head pipe and frame members to each other is utilized as a fuel passage for supplying an oil into a fuel tank is known, as disclosed in Japanese Patent Publication No. JP6015353B herein after referred to as Patent Document 1.

Meanwhile, in the motorcycle disclosed in Patent Document 1, the lower end of the main pipe is connected directly to the fuel tank, and the oil supply pipe is connected directly to an upper part of the main pipe. Therefore, not only restrictions are imposed on the shape and layout of the fuel tank, but also it becomes difficult to detach the fuel tank, resulting in a lowering in maintainability. Also, the oil supply pipe is restricted as to layout thereof and becomes difficult to detach, leading to a lowering in maintainability.

Moreover, in the motorcycle disclosed in Patent Document 1, the front ends of the frame members are each connected to that portion of the main pipe which is utilized as the fuel passage, and a body frame of such a structure is generally configured by connecting the frame members by welding. Where the front ends of the frame members are welded to the main pipe, in the structure disclosed in Patent Document 1, it is desirable to ensure that the inside surface of the main pipe exposed to the fuel is not influenced by the welding. For this purpose, it may be contemplated to increase the material thickness of the main pipe, but this approach may lead to an increase in the weight of the body frame or a rise in its cost.

Additionally, in the motorcycle disclosed in Patent Document 1, a structure in which air present in the fuel tank is discharged at the time of supplying the fuel oil is realized by connecting the fuel tank disposed on the lower side of a foot rest and the oil supply pipe to each other by a breather tube. However, when a condition where the main pipe is filled with the fuel begins to exist in the condition where the fuel tank is filled up with the fuel, it becomes impossible to smoothly conduct the fuel oil supply, due to the influence of the air present in the main pipe, since a structure for discharging the air present in the main pipe is not provided.

JP 06008864 discloses a scooter type vehicle wherein a compulsory air-cooled type two-cycle horizontally placed engine and a transmission case are integrally assembled, and formed to an almost L-shape, viewed from the above. The front part of the transmission case, i.e., the upper part in the vicinity of the center of a power unit is connected in vertically swingable manner with a rear part frame through a link. The cylinder of an engine projects forward and nearly horizontally, and intrudes between the left and right rear part frames. The lower part of a baggage box intrudes between the left and right rear part frames, and the capacity is increased by increasing the depth of the baggage JP06008864 further discloses a fuel oil supply structure according to the preamble of claim 1.

The present invention has been made in consideration of the above-mentioned circumstances. Accordingly, it is a first object of the present invention to provide a fuel oil supply structure for a small-type vehicle with which it is possible to enhance the degree of freedom in designing the shape and layout of a fuel tank and to enhance maintainability. It is a second object of the invention to provide a fuel oil supply structure for a small-type vehicle with which it is possible to enhance the degree of freedom in designing the layout of an oil supply pipe and to enhance maintainability.

In order to attain the above-mentioned first object, a fuel oil supply structure having the features of claim 1 is provided. Preferred embodiments of the invention are defined in the dependent claims.

The invention as set forth in claim 1 resides in a fuel oil supply structure for a small-type vehicle including: a body frame which includes a head pipe for steerably supporting a steering handle and a front fork, and a hollow main pipe extending rearwardly downwards from the head pipe and forming a fuel passage at least at a part thereof; an oil supply pipe for supplying a fuel into the fuel passage, the oil supply pipe being connected to the main pipe; and a fuel tank supplied with the fuel from oil supply pipe through the fuel passage, the fuel tank being connected to a lower part of the main pipe, characterized in that one end of a flexible lower connecting tube is connected to the main pipe so as to communicate with the fuel passage, and the other end of the lower connecting tube is connected to the fuel tank, wherein a lower part of the main pipe is closed with a closing member which determines the lower end position of the fuel passage, and the one end of the lower connecting tube is connected to a side surface of the main pipe at a position above the closing member.

In addition, the invention as set forth in claim 2 is characterized in that, in addition to the configuration of the invention as set forth in claim 1, the other end of the lower connecting tube is connected to an upper surface of the fuel tank at a position below a connected part where the lower connecting tube is connected to the main pipe.

The invention as set forth in claim 3 is characterized in that, in addition to the configuration of the invention as set forth in claim 1 or 2, the lower connecting tube is disposed to be bent in plan view so that a connected part where the other end of the lower connecting tube is connected to the fuel tank is disposed with an offset to one of the left and right sides in relation to a connected part where the one end of the lower connecting tube is connected to the main pipe.

The invention as set forth in claim 4 is characterized in that, in addition to the configuration of the invention as set forth in claim 3, a side stand is disposed on one of the left and right sides of the body frame, and the connected part where the lower connecting tube is connected to the fuel tank is disposed with an offset to the side of the side stand with respect to the connected part where the lower connecting tube is connected to the main pipe.

The invention as set forth in claim 5 is characterized in that, in addition to the configuration of the invention as set forth in any of claims 1 to 4, one end of a flexible upper connecting tube is connected to the oil supply pipe, and the other end of the upper connecting tube is connected to the main pipe so as to communicate with the fuel passage.

The invention as set forth in claim 6 is characterized in that, in addition to the configuration of the invention as set forth in any of claims 1 to 5, the oil supply pipe is disposed to be deviated to one of the left and right sides in relation to the axis of the main pipe.

The invention as set forth in claim 7 is characterized in that, in addition to the configuration of the invention as set forth in claim 6, an accelerator cable is laid along the main pipe on the side of the oil supply pipe with respect to a vertical plane containing the axis of the main pipe, whereas, on the side opposite of the oil supply pipe and the accelerator cable with respect to the vertical plane, a main switch is disposed, and a wire harness is laid along the main pipe.

The invention as set forth in claim 8 is characterized in that, in addition to the configuration of the invention as set forth in any of claims 1 to 7, a side stand is disposed on one of the left and right sides of the body frame, an air vent is provided at an upper surface of the fuel tank on the side opposite to the side of the side stand with respect to a vertical plane containing the axis of the main pipe, and an air vent conduit connected at one end thereof to the air vent is connected at the other end thereof to the oil supply pipe.

The invention as set forth in claim 9 is characterized in that, in addition to the configuration of the invention as set forth in claim 8, the air vent conduit is laid along the main pipe on the side of the oil supply pipe with respect to the vertical plane containing the axis of the main pipe.

The invention as set forth in claim 10 is characterized in that, in addition to the configuration of the invention as set forth in claims 1 to 9, the vehicle further comprising frame members each connected to the main pipe at a front part thereof and extending rearwards, wherein a lower part of the main pipe is closed at a position spaced upwards from the lower end of the main pipe by a closing member which determines the lower end position of the fuel passage, a connecting tube connected to the main pipe at one end thereof so as to communicate with the fuel passage at a position above the closing member is connected to the fuel tank at the other end thereof, and front parts of the frame members are each welded to the main pipe at a position below the closing member.

In addition, the invention as set forth in claim 11 is characterized in that, in addition to the configuration of the invention as set forth in claim 10, the front ends of front parts of a left-right pair of the frame members are welded to both sides of the main pipe at positions below the closing member, and a left-right pair of reinforcing members are provided between front parts of both the frame members and the main pipe.

The invention as set forth in claim 12 is characterized in that, in addition to the configuration of the invention as set forth in claim 11, the one end of the connecting tube is connected to a rear surface of the main pipe between both the reinforcing members.

The invention as set forth in claim 13 is characterized in that, in addition to the configuration of the invention as set forth in any of claims 10 to 12, a cross member passing on the front side of a lower part of the main pipe in side view is provided between front parts of both the frame members.

Furthermore, the invention as set forth in claim 14 is characterized in that, in addition to the configuration of the invention as set forth in any of claims 10 to 13, the oil supply pipe is disposed to be deviated to one of the left and right sides in relation to the axis of the main pipe.

The invention as set forth in claim 15 is characterized in that, in addition to the configuration of the invention as set forth in any of claims 1 to 14, an air vent is provided at the main pipe at a position above a connected part where the oil supply pipe is connected to the main pipe.

In addition, the invention as set forth in claim 16 is characterized in that, in addition to the configuration of the invention as set forth in claim 15, the air vent is connected to the oil supply pipe through a communicating pipe.

The invention as set forth in claim 17 is characterized in that, in addition to the configuration of the invention as set forth in claim 16, the oil supply pipe is connected to the main pipe in such a manner that the upper end thereof is located above the upper end of the head pipe, and the communicating pipe is connected to the oil supply pipe at a position above the upper end of the head pipe.

The invention as set forth in claim 18 is characterized in that, in addition to the configuration of the invention as set forth in claim 16 or 17, the oil supply pipe is connected to the main pipe through a flexible connecting tube disposed on one of the left and right sides of a vertical plane containing the axis of the main pipe, and the communicating pipe is connected to the oil supply pipe at a position near the vertical plane.

The invention as set forth in claim 19 is characterized in that, in addition to the configuration of the invention as set forth in any of claims 16 to 18, one end of a breather tube formed to be larger in diameter than the communicating pipe while having a curved part so curved as to bulge upwards on the upper side of the oil supply pipe is connected to the fuel tank so as to guide the air present in the fuel tank, and the other end of the breather tube is connected to an upper surface of the oil supply pipe at a position below a connected part where the communicating pipe is connected to the oil supply pipe.

The invention as set forth in claim 20 is characterized in that, in addition to the configuration of the invention as set forth in claim 19, the breather tube is so laid as to pass through a region surrounded by the main pipe, the oil supply pipe and the communicating pipe.

The invention as set forth in claim 21 is characterized in that, in addition to the configuration of the invention as set forth in claim 19 or 20, a fuel discharge port for discharging an overflow fuel coming from the oil supply pipe is provided at the oil supply pipe at substantially the same height as a connected part where the communicating pipe is connected to the oil supply pipe, and an overflow tube is connected to the fuel discharge port.

The invention as set forth in claim 22 is characterized in that, in addition to the configuration of the invention as set forth in any of claims 19 to 21, an overflow tube is so laid as to pass on the inner side of the curved part of the breather tube.

Furthermore, the invention as set forth in claim 23 is characterized in that, in addition to the configuration of the invention as set forth in any of claims 18 to 22, a main switch is disposed on the right side of the main pipe, while the oil supply pipe is disposed on the left side of the main pipe and is connected to a left side surface of the main pipe.

Incidentally, the lower frames 15 in the embodiments of the present invention correspond to the frame members in the invention, the upper connecting tube 32 in the embodiments corresponds to the connecting tube in the present invention, the lower connecting tube 34 in the embodiments corresponds to the connecting tube in the invention, the plug 35 in the embodiments of the present invention corresponds to the closing member in the invention, the breather tube 48 in the embodiments corresponds to the air vent conduit in the invention, the main pipe side air vent 50 in the embodiments corresponds to the air vent in the invention, and the rubber hose 52 in the embodiments corresponds to the communicating pipe in the invention.

According to the invention as set forth in claim 1, the main pipe and the oil supply tank are connected to each other through a flexible lower connecting tube, so that it is possible to enhance the degree of freedom in designing the shape and layout of the fuel tank, to easily detach the fuel tank from the main pipe, and thereby to enhance maintainability.

According to the invention as set forth in claim 1, the portion between the closing member at a lower part of the main pipe and the connected part where the one end of the connecting tube is connected to the main pipe, of the fuel passage inside the main pipe, can be utilized as a collecting portion, so that foreign matters penetrating into the fuel passage from the oil supply pipe can be kept collected in the collecting portion, whereby the foreign matters can be restrained from penetrating into the fuel tank.

According to the invention as set forth in claim 2, the lower connecting tube is connected to an upper surface of the fuel tank at a position below the connected part where the lower connecting tube is connected to the main pipe. This ensures that, even where starting and stopping of the small-type vehicle are frequently made when the amount of the fuel reserved in the fuel tank is reduced, forward and rearward movements of the fuel in the fuel tank are restricted by a front wall and a rear wall of the fuel tank, whereby it is made possible to prevent the fuel from moving toward the side of the fuel passage inside the main pipe due to the frequent starting and stopping of the small-type vehicle, to restrain the weight balance of the small-type vehicle from being deviated in the front-rear direction, and to accurately grasp the residual amount of the fuel.

According to the invention as set forth in claim 3, the lower connecting tube is disposed in a bent form, so that movement of the fuel from the fuel tank into the fuel passage inside the main pipe can be restrained more effectively.

According to the invention as set forth in claim 4, the lower connecting tube is bent toward the side where the side stand is disposed, so that the fuel can be injected through the oil supply passage into the fuel tank smoothly and rationally at the time of supplying the oil in the parking condition where the side stand is erected.

According to the invention as set forth in claim 5, the oil supply pipe and the main pipe are connected to each other through the flexible upper connecting tube, so that it is possible to enhance the degree of freedom in designing the layout of the oil supply pipe, to easily detach the oil supply pipe from the main pipe, and thereby to enhance maintainability.

According to the invention as set forth in claim 6, the oil supply pipe is disposed at such a position as not to overlap with the main pipe in rear view, whereby it is possible to restrain the oil supply pipe from protruding rearwards, thereby to restrain the oil supply pipe from interfering with the rider, and to contrive a reduction in the size of the small-type vehicle.

According to the invention as set forth in claim 7, an accelerator cable is laid on the side of the oil supply pipe with respect to the vertical plane containing the axis of the main pipe, a main switch is disposed and the wire harness is laid on the side opposite of the oil supply pipe and the accelerator cable with respect to the vertical plane, so that an efficient layout without influence of the fuel can be achieved.

According to the invention as set forth in claim 8, an air vent is provided at an upper surface of the fuel tank on the side opposite to the side of the side stand with respect to the vertical plane containing the axis of the main pipe, so that the fuel oil can be securely supplied into the fuel tank while assuredly discharging the air present in the fuel tank, at the time of supplying the fuel oil in the parking condition where the side stand is erected.

Furthermore, according to the invention as set forth in claim 9, an air vent conduit is laid along the main pipe on the side of the oil supply pipe with respect to the vertical plane containing the axis of the main pipe, so that the fuel system can be collectively arranged on one of the left and right sides of the main pipe, whereby maintainability can be enhanced.

According to the invention as set forth in claim 10, a lower part of the main pipe is closed at a position spaced upwards from the lower end of the main pipe by a closing member which determines the lower end position of the fuel passage, a connecting tube connected to the main pipe at one end thereof so as to communicate with the fuel passage at a position above the closing member is connected to the fuel tank at the other end thereof, and front parts of the frame members are each welded to the main pipe at a position below the closing member. This results in that the front parts of the frame members are each welded to the main pipe at a position below the portion, exposed to the fuel, of the inside surface of the main pipe. Therefore, by ensuring that the portion, exposed to the fuel, of the inside surface of the main pipe is not influenced by the welding of the frame members to the main pipe, it is possible to set the material thickness of the main pipe to be comparable to a main pipe the inside of which is not used as a fuel passage, and it is possible to contrive reductions in the weight and cost of the body frame.

In addition, according to the invention as set forth in claim 11, the connected parts between the front parts of both the frame members and the main pipe are reinforced with the reinforcing members which are less influenced by welding than the frame members. This makes it possible to enhance the connection strength between the main pipe and both the frame members while suppressing the influence of the welding to the fuel passage.

According to the invention as set forth in claim 12, the connecting tube can be connected to the main pipe at such a portion as not to influence the layout of the reinforcing members, while enabling reinforcement with the reinforcing members.

According to the invention as set forth in claim 13, the connection strength in connection of the left-right pair of frame members to the main pipe can be enhanced with the cross member, and the lower part of the main pipe forming the fuel passage can be protected on the front side by the cross member.

Furthermore, according to the invention as set forth in claim 14, the oil supply pipe having an oil supply port located at such a position as not to overlap with the main pipe in rear view can be restrained from protruding rearwards, whereby the fuel supply pipe can be restrained from interfering with the rider, and a reduction in the size of the small-type vehicle can be contrived.

According to the invention as set forth in claim 15, an air vent is provided at the main pipe at a position above the connected part where the oil supply pipe is connected to the main pipe. This makes it possible to favorably discharge the air present in the main pipe through the air vent at the time of supplying the fuel oil, and to smoothly inject the fuel into the main pipe. As a result, efficiency of fuel oil supply can be enhanced, and a larger amount of the fuel can be speedily supplied.

In addition, according to the invention as set forth in claim 16, the air vent is connected to the oil supply pipe through a communicating pipe, so that when a lower part of the main pipe begins to be filled with the fuel at the time of fuel supply, the fuel in an atomized state is discharged to the oil supply side through the communicating pipe together with the air present in the main pipe. As a result, an oil supply gun inserted in the oil supply pipe is exposed to the fuel-containing foggy air, an automatic stop sensor for stopping the fuel supply functions to permit automatic stopping, whereby the fuel oil supply can be stopped in the condition where an appropriate amount of the fuel has just been supplied.

According to the invention as set forth in claim 17, the upper end of the oil supply pipe and the connected part where the communicating pipe is connected to the supply pipe are disposed above the upper end of the head pipe, whereby the fuel can be reserved inside the main pipe up to a higher position while favorably discharging the air present in the main pipe.

According to the invention as set forth in claim 18, the air vent at the main pipe and the oil supply pipe can be connected to each other through the communicating pipe which is minimized in length.

According to the invention as set forth in claim 19, the efficiency of injection of the fuel into the fuel tank can be enhanced through favorably discharging the air present in the fuel tank, in which air is present in a larger amount than that in the main pipe. In addition, since the fuel in an atomized state is guided into the oil supply pipe on the upper side of the oil supply gun inserted in the oil supply port, so that it can be made difficult for the automatic stop sensor to operate, the automatic stopping can be made less liable to occur, and the work efficiency at the time of oil supply can be enhanced.

According to the invention as set forth in claim 20, the breather tube can be protected by surrounding it with the main pipe, the oil supply pipe and the communicating pipe. In addition, the breather tube can be effectively disposed in a space surrounded by the main pipe, the oil supply pipe and the communicating pipe, whereby the breather tube can be prevented from being entangled with the communicating pipe.

According to the invention as set forth in claim 21, a fuel discharge port is provided at the oil supply pipe at substantially the same height as the connected part where the communicating pipe is connected to the oil supply pipe, and an overflow tube is connected to the fuel discharge port. Therefore, an overflow mechanism can be provided at the oil supply pipe so as to be little influenced by the communicating pipe and the breather tube, and the overflow function can be displayed securely.

According to the invention as set forth in claim 22, the overflow tube can be laid in an unoccupied space on the inner side of a curved part of the breather tube so as not to be entangled with the breather tube.

Furthermore, according to the invention as set forth in claim 23, the oil supply pipe can be disposed at such a position as not to be influenced by the layout or operation of a main switch, whereby efficiency of oil supply work can be enhanced.

Now, a mode of carrying out the present invention will be described below, based on an embodiment of the invention shown in the accompanying drawings.
- FIG. 1: is a left side view of a motor scooter type motorcycle according to a first embodiment of the present invention.
- FIG. 2: is a left side view of a body frame and a fuel tank.
- FIG. 3: is an enlarged view of an essential part of FIG. 2.
- FIG. 4: is a view taken along arrow 4 of FIG. 3.
- FIG. 5: is a perspective view of a part of the body frame and the fuel tank.
- FIG. 6: is a vertical sectional view showing a front part of the fuel tank and a lower part of the main pipe.
- FIG. 7: is a left side view of a motor scooter type motorcycle according to a second embodiment of the present invention.

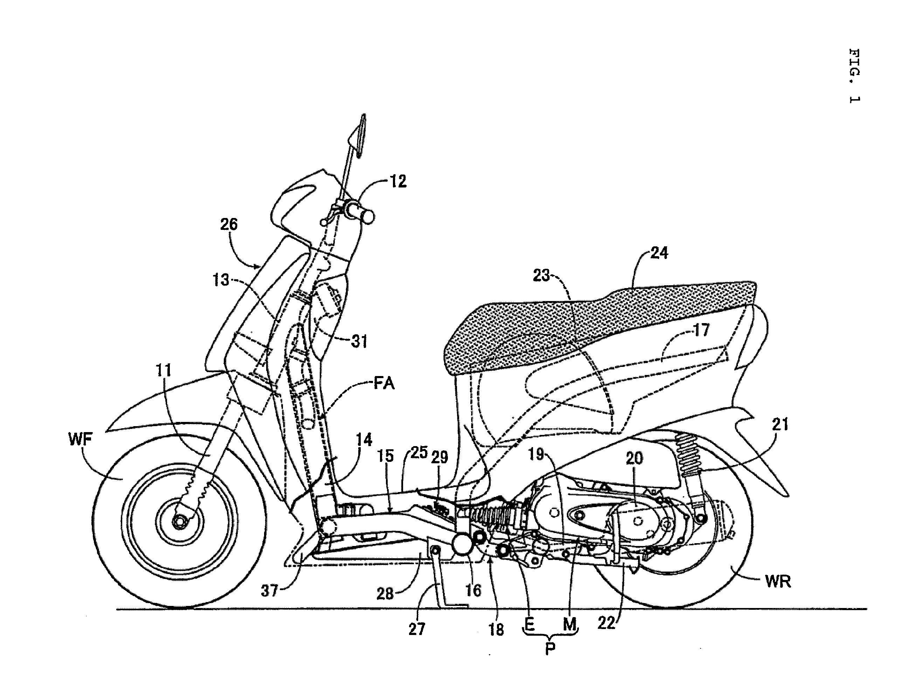

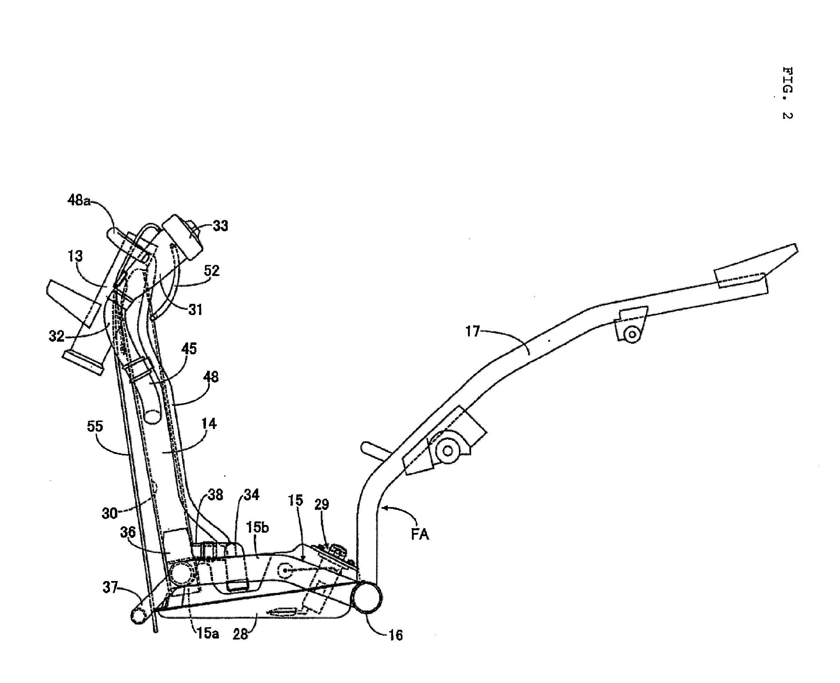

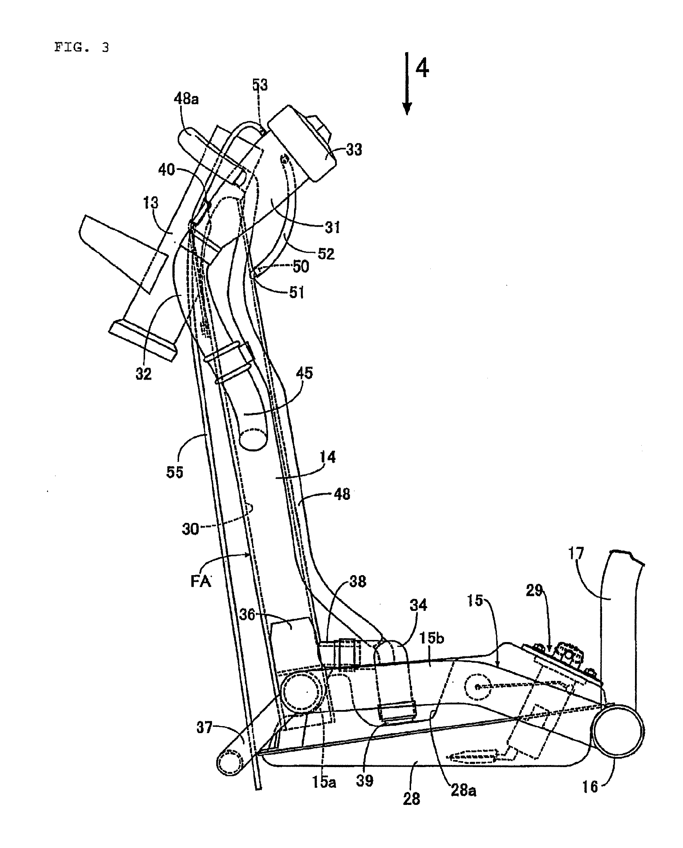

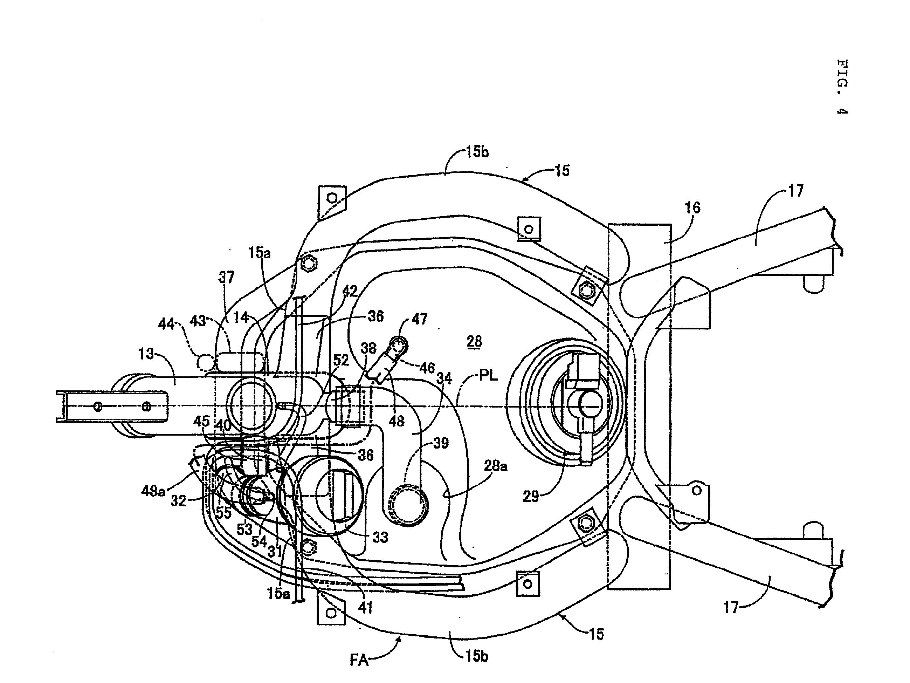

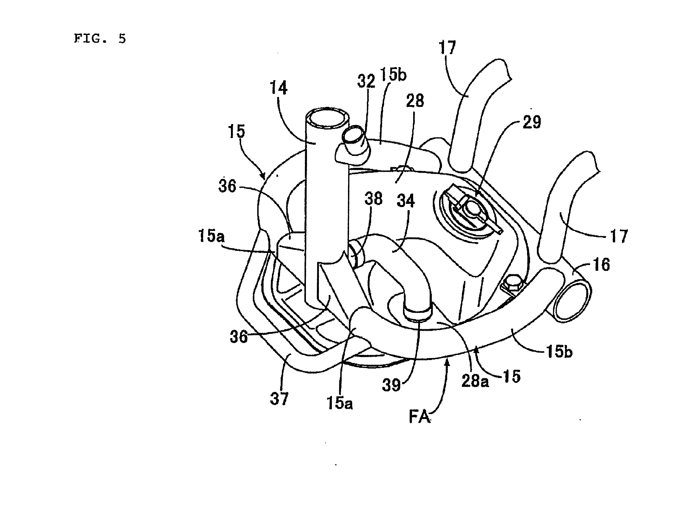

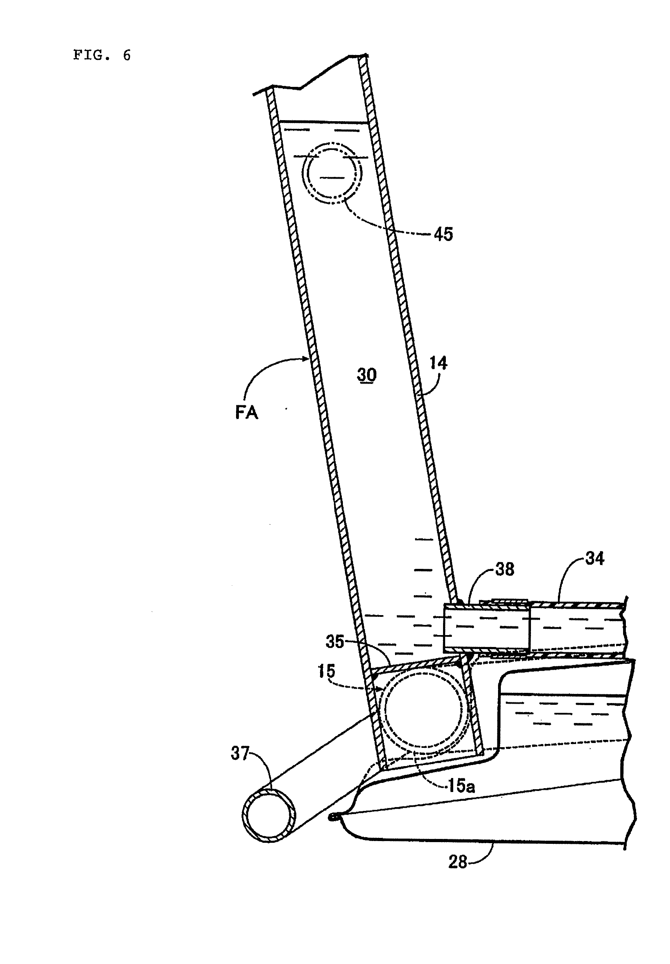

FIGS. 1 to 6 show a first embodiment of the present invention, wherein FIG. 1 is a left side view of a motor scooter type motorcycle, FIG. 2 is a left side view of a body frame and a fuel tank, FIG. 3 is an enlarged view of an essential part of FIG. 2, FIG. 4 is a view taken along arrow 4 of FIG. 3, FIG. 5 is a perspective view of a part of the body frame and the fuel tank, and FIG. 6 is a vertical sectional view showing a front part of the fuel tank and a lower part of the main pipe.

In FIGS. 1 to 4, a body frame FA of the motor scooter type motorcycle which is a small-type vehicle includes: a head pipe 13 for steerably supporting a front fork 11, located astride a front wheel WF so as to rotatably support the front wheel WF at a lower end part thereof, and a steering handle 12 connected to the upper end of the front fork 11; a hollow main pipe 14 connected to a lower part of the main pipe 14 and extending rearwardly downwards; a left-right pair of lower frames 15, 15 each connected to a lower part of the main pipe 14 and extending rearwards; a cross pipe 16 connecting rear end parts of both the lower frames 15 ...; and a left-right pair of rear frame pipes 17, 17 connected respectively to both end parts of the cross pipe 16 at the front ends thereof.

The lower frames 15 ... integrally include side extension parts 15a ... connected to both the left and right sides of a lower part of the main pipe 14 by welding and extending toward both lateral sides, and rear extension parts 15b ... extending rearwards from the outer ends of the side extension parts 15a ... The rear ends of the rear extension parts 15b ... are connected to both left and right end parts of the cross pipe 16 by welding.

On front parts of both the rear frame pipes 17 ... of the body frame FA, a power unit P composed of an engine E disposed on the front side of a rear wheel WR and a mission (transmission) M disposed on the left side of the rear wheel WR is vertically swingably supported through links 18, and the rear wheel WR is rotatably supported on a rear part of the power unit P.

The mission M is contained in a mission case 20 continuous with a crankcase 19 of the engine E and extending toward the left side of the rear wheel WR, and a rear cushion unit 21 is provided between a rear part of the mission case 20 and the left-side rear frame pipe 17 of the left-right pair of rear frame pipes 17 ...

A luggage box 23 capable of storing a helmet and the like is supported between both the rear frame pipes 17 ... so as to be located on the upper side of the engine E, and a riders' seat 24 covering the luggage boxy 23 from above is supported on a front upper part of the luggage boxy 23 so that it can be opened and closed. In addition, a part of the engine E and the body frame FA are covered with a body cover 26 having a step floor 25 on which to put the feet of the rider seated on the riders' seat 24.

A side stand 27 turnable between an erected position of being erected on a road surface for parking the motorcycle and a stored position (the position shown in FIG. 1) of being separated from the road surface so as to permit running of the motorcycle is attached to a rear part of the rear extension part 15b of the left-side lower frame 15 of both the lower frames 15 ... of the body frame FA. In addition, a main stand 22 turnable between an erected position and a stored position is attached to a front-side lower part of the power unit P.

Referring to FIG. 5 also, in a region surrounded by the main pipe 14, both the lower frames 15 ... and the cross pipe 16 in the body frame FA, a fuel tank 28 is disposed so as to be located on the lower side of the step floor 25, and a plurality of portions located at intervals along the circumferential direction of the fuel tank 28 are supported by both the lower frames 15 ... At a rear part of the fuel tank 28, a pump unit 29 for supplying the engine E with a fuel reserved in the fuel tank 28 is disposed.

Referring further to FIG. 6 also, a fuel passage 30 is formed in least at a part of the main pipe 14, a lower part of an oil supply pipe 31 for supplying the fuel into the fuel passage 30 is connected to an intermediate part of the main pipe 14 through a flexible rubber-made upper connecting tube 32, and an upper-end opening part of the oil supply pipe 31 is closed with a cap 33 which can be opened and closed. The fuel supplied from the oil supply pipe 31 into the fuel passage 30 is led into the fuel tank 28 through an elastic rubber-made lower connecting tube 34 connected to a lower part of the main pipe 14.

Meanwhile, a lower part of the main pipe 14 is closed at a position spaced upwards from the lower end of the main pipe 14 by a plug 35 which determines the lower end position of the fuel passage 30, and the front ends of the lower frames 15 ... are each welded to the main pipe 14 at a position below the plug 35.

The inner ends of the side extension parts 15a ... of the left-right pair of lower frames 15 ... are welded to both left and right sides of the main pipe 14 at positions below the plug 35, and a left-right pair of reinforcing members 36, 36 being substantially in the shape of bottom-open (or inverted) U in projection onto a plane orthogonal to the axes of the side extension parts 15a are provided between front parts, specifically the side extension parts 15a ..., of both the lower frames 15 ... and the main pipe 15. In addition, a cross member 37 passing on the front side of a lower part of the main pipe 14 in side view is provided between front parts, specifically the side extension parts 15a ..., of the lower frames 15 ...

A first short pipe 38 opening into the fuel pipe 30 at a position above the plug 35 is welded to a rear surface of a lower part of the main pipe 14 between both the reinforcing members 36, 36, and one end of the lower connecting tube 34 is connected to the first short pipe 38. Besides, an upper surface of the fuel tank 28 is provided with a recessed part 28a opened to the upper side and the left side at a position deviated to the left side from a vertical plane PL passing through the axes of the head pipe 13 and the main pipe 14. A second short pipe 39 is welded to a bottom surface of the recessed part 28a of the upper surface of the fuel tank 28, in the manner of projecting upwards, and the other end of the lower connecting tube 34 is connected to the second short pipe 39 at a position below the first short pipe 38.

In other words, the lower connecting tube 34 connected at its one end to the main pipe 14 so as to communicate with the fuel passage 30 at a position above the plug 35 is connected at its other end to an upper surface of the fuel tank 28 at a position below the connected part where the lower connecting tube 34 is connected to the main pipe 14. Moreover, the connected part where the other end of the lower connecting tube 34 is connected to the oil supply tank 28, namely, the second short pipe 39 provided at the fuel tank 28 is disposed with a leftward or rightward offset in relation to the connected part where one end of the lower connecting tube 34 is connected to the main pipe 14, namely, the first short pipe 38 provided at the main pipe 14; in this embodiment, the offset is to the side of the side stand 27 disposed on the left side of the body frame FA, so that the lower connecting tube 34 is disposed in the state of being bent in plan view.

Meanwhile, the oil pipe 31 is disposed to be deviated to one of the left and right sides from the axis of the main pipe 14; in this embodiment, the oil supply pipe 31 is located to be deviated to the left side from the axis of the main pipe 14, and an attaching member 40 firmly attached to the oil supply pipe 31 is attached to a left side surface of the main pipe 14. Moreover, the oil supply pipe 31 is supported by the main pipe 14 in such a manner that its upper end is located above the upper end of the head pipe 13.

One end of the flexible upper connecting tube 32 is connected to a lower part of the oil supply pipe 31, and the other end of the upper connecting tube 32 is connected to a third short pipe 45 which is provided at a left side surface of an intermediate part in the vertical direction of the main pipe 14 so as to communicate with the fuel passage 30.

In addition, on the side of the oil supply pipe 31 with respect to the vertical plane PL containing the axes of the head pipe 13 and the main pipe 14, namely, on the left side of the vertical plane PL, a brake cable 41 and an accelerator cable 42 are laid along the main pipe 14. On the other hand, on the opposite side of the oil supply pipe 31, the brake cable 41 and the accelerator cable 42 with respect to the vertical plane PL, a main switch 43 is disposed, and a wire harness 44 is laid along the main pipe 14.

Meanwhile, the side stand 27 (see FIG. 1) is disposed on the left side of the body frame FA, and a fourth short pipe 47 forming a tank-side air vent 46 is provided at an upper surface of the fuel tank 28, on the opposite side of the side stand 27 with respect to the vertical plane PL containing the axes of the head pipe 13 and the main pipe 14, namely, on the right side with respect to the vertical plane PL. A breather tube 48 connected at its one end to the fourth short pipe 47 so as to communicate with the tank-side air vent 46 is connected at its other end to the oil supply pipe 31, and the breather tube 48 is laid along the main pipe 14 on the side of the oil supply pipe 31 with respect to the vertical plane PL.

On the other hand, above the connected part where the oil supply pipe 31 is connected to the main pipe 14, namely, above the position of connection of the third short pipe 45 to the main pipe 14, the main pipe 14 is provided with a fifth short pipe 51 forming a main pipe side air vent 50 (see FIG. 3), and the main pipe side air vent 50 is connected to the oil supply pipe 31 through a rubber hose 52.

The upper end of the oil supply pipe 31 is disposed above the upper end of the head pipe 13, and the rubber hose 52 is connected to the oil supply pipe 31 at a position above the upper end of the head pipe 13. Moreover, the oil supply pipe 31 is disposed on the left side of the vertical plane PL containing the axes of the head pipe 13 and the main pipe 14, and the rubber hose 52 is connected to the oil supply pipe 31 at a position near the vertical plane PL.

Meanwhile, the breather tube 48 communicating at its one end with the tank-side air vent 46 of the fuel tank 28 is formed to be larger in diameter than the rubber hose 52 while having a curved part 48a curved so as to bulge upwards on the front upper side of the oil supply pipe 31, and is so laid as to pass through a region surrounded by the main pipe 14, the oil supply pipe 31 and the rubber hose 52 in the vicinity of the oil supply pipe 31. Moreover, the other end of the breather tube 48 is connected to an upper surface of the oil supply pipe 31 at a position below the connected part where the rubber hose 52 is connected to the oil supply pipe 31.

A sixth short pipe 54 forming a fuel discharge port 53 for discharging an overflow fuel coming from the oil supply pipe 31 is provided in the oil supply pipe 31 at substantially the same height as the connected part where the rubber hose 52 is connected to the oil supply pipe 31, and one end of an overflow tube 55 communicating with the fuel discharge port 53 is connected to the sixth short pipe 54. Moreover, the overflow tube 55 is so laid as to extend downwards through the inside of the curved part 48a of the breather tube 48.

Now, the operation of the first embodiment will be described below. A lower part of the main pipe 14 of the body frame FA is closed with the plug 35, which determines the lower end position of the fuel passage 30, at a position spaced upwards from the lower end of the main pipe 14, and the front ends of the lower frames 15 ... are each welded to the main pipe 14 at a position lower than the plug 35. This makes it possible to prevent the portion, exposed to the fuel, of the inside surface of the main pipe 14 from being influenced by the welding of the lower frames 15 ... to the main pipe 14, to set the material thickness of the main pipe 14 to be comparable to that of a main pipe of which the inside is not used as a fuel passage, and to contrive reductions in the weight and cost of the body frame FA.

Moreover, one end of the flexible lower connecting tube 34 is connected to the main pipe 14 so as to communicate with the fuel passage 30, and the other end of the lower connecting tube 34 is connected to the fuel tank 28. This makes it possible to enhance the degrees of freedom in designing the shape and layout of the fuel tank 28, to permit the fuel tank 28 to be easily detached from the main pipe 14, and to thereby enhance the maintainability.

In addition, the lower connecting tube 34 connected at its one end to the main pipe 14 so as to communicate with the fuel passage 30 at a position above the plug 35 is connected at its other end to the upper surface of the fuel tank 28. Even where starting and stopping of the motorcycle are frequently made when the amount of the fuel reserved in the fuel tank 28 is reduced, therefore, the forward and rearward movements of the fuel in the fuel tank 28 are restricted by a front wall and a rear wall of the fuel tank 28. As a result, the fuel in the fuel tank 28 can be restrained from moving to the side of the fuel passage 30 inside the main pipe 14 due to frequent starting and stopping of the motorcycle, the weight balance of the motorcycle can be restrained from being deviated in the front-rear direction, and the residual fuel amount can be grasped accurately. In addition, of the fuel passage 30 inside the main pipe 14, the portion between the plug 35 at a lower part of the main pipe 14 and the connected part where one end of the lower connecting tube 34 is connected to the main pipe 14 can be utilized as a collecting portion, so that foreign matters penetrating into the fuel passage 30 from the oil supply pipe 31 can be kept collected in the collecting portion, whereby the foreign matters can be restrained from penetrating into the fuel tank 28.

In addition, since the lower connecting tube 34 is disposed in a bent state in plan view so that the connected part where the lower connecting tube 34 is connected to the fuel tank 28 is located with an offset to the left side from the connected part where the lower connecting tube 34 is connected to the main pipe 14, the movement of the fuel from the fuel tank 28 into the fuel passage 30 inside the main pipe 14 can be restrained more effectively. Further, since the lower connecting tube 34 is bent toward the side where the side stand 27 is disposed, the fuel can be injected through the oil supply passage 30 into the fuel tank 28 smoothly and rationally at the time of supplying the oil in the parking condition where the side stand 27 is erected.

Besides, since the front ends of the left-right pair of lower frames 15 ... are welded respectively to both sides of the main pipe 14 at positions below the plug 35 and the left-right pair of reinforcing members 36 ... are provided between the front parts of both the lower frames 15 ... and the main pipe 14, the connected parts between the front parts of both the lower frames 15 ... and the main pipe 14 are reinforced by the reinforcing members 36 ... which are less influenced by the welding than the lower frames 15 ... Therefore, the joint strength between the main pipe 14 and both the lower frames 15 ... can be enhanced while suppressing the influence of the welding on the fuel passage 30.

In addition, since one end of the lower connecting tube 34 is connected to the rear surface of the main pipe 14 between both the reinforcing members 36 ..., the lower connecting tube 34 can be connected to the main pipe 14 at such a portion as not to influence the layout of the reinforcing members 36 ..., while permitting reinforcement with the reinforcing members 36 ...

Moreover, since the cross member 37 passing on the front side of a lower part of the main pipe 14 in side view is provided between the front parts of both the lower frames 15 ..., the joint strength in joining the left-right pair of lower frames 15 ... to the main pipe 14 can be enhanced, and the lower part of the main pipe 14 forming the fuel passage 30 can be protected on the front side by the cross member 37.

Besides, since the oil supply pipe 31 for supplying the fuel into the fuel passage 30 inside the main pipe 14 is connected to the main pipe 14 through the flexible upper connecting tube 32, it is possible to enhance the degree of freedom in laying out the oil supply pipe 31, to easily detach the oil supply pipe 31 from the main pipe 14, and to thereby enhance maintainability.

Moreover, since the oil supply pipe 31 is disposed to be deviated to the left side in relation to the axis of the main pipe 14, the oil supply pipe 31 is disposed at such a position as not to overlap with the main pipe 31 in rear view. This makes it possible to suppress the rearward protrusion of the oil supply pipe 31, to restrain the oil supply pipe 31 from interfering with the rider, and to contrive a reduction in the size of the motorcycle.

Moreover, the brake cable 41 and the accelerator cable 42 are laid out along the main pipe 14 on the side of the oil supply pipe 31 with respect to the vertical plane PL containing the axes of the head pipe 13 and the main pipe 14, whereas, on the opposite side of the oil supply pipe 31, the brake cable 41 and the accelerator cable 42 with respect to the vertical plane PL, the main switch 43 is disposed, and the wire harness 44 is laid along the main pipe 14, and, therefore, an efficient layout free of any influence of the fuel can be achieved.

Meanwhile, the side stand 27 is disposed on the left side of the body frame FA, the tank-side air vent 46 is provided at an upper surface of the fuel tank 27 on the side opposite to the side of the side stand 27 with respect to the vertical plane PL, and the breather tube 48 connected at its one end to the tank-side air vent 46 is connected at its other end to the oil supply pipe 31. Therefore, at the time of supplying the fuel in the parking condition where the side stand 27 is erected, air inside the fuel tank 28 can be securely discharged, and the fuel can be assuredly supplied into the fuel tank 28.

In addition, the main pipe 14 is provided with the main pipe side air vent 50 at a position above the connected part where the oil supply pipe 31 is connected to the main pipe 14. At the time of supplying the fuel, therefore, air inside the main pipe 14 can be favorably discharged through the main pipe side air vent 50, and the fuel can be smoothly injected into the main pipe 14. As a result, oil supply efficiency can be enhanced, and a larger amount of the fuel can be supplied speedily.

Moreover, the main pipe side air vent 50 is connected to the oil supply pipe 31 through the rubber hose 52; therefore, when a lower part of the main pipe 14 starts to be filled with the fuel at the time of supplying the oil, the fuel in an atomized state is discharged to the side of the oil supply pipe 31 through the rubber hose 52, together with air present inside the main pipe 14. Then, an oil supply gun inserted into the oil supply pipe 31 is exposed to the fuel-containing foggy air. As a result, automatic stopping can be achieved by acting on an automatic stop sensor for stopping the fuel supply, and the oil supply (fuel supply) can be stopped in the condition where an appropriate amount of the fuel has just been supplied.

In addition, since the oil supply pipe 31 is connected to the main pipe 14 with its upper end located above the upper end of the head pipe 13 and the rubber hose 52 is connected to the oil supply pipe 31 at a position above the upper end of the head pipe 13, the fuel can be reserved inside the main pipe 14 up to an upper position, while favorably discharging the air present inside the main pipe 14.

Besides, the oil supply pipe 31 is disposed on the left side of the vertical plane PL containing the axes of the head pipe 13 and the main pipe 14 and is connected to the main pipe 14 through the flexible upper connecting tube 32, and the rubber hose 52 is connected to the oil supply pipe 31 at a position near the vertical plane PL. Therefore, the main pipe side air vent 50 and the oil supply pipe 31 can be connected to each other through the rubber hose 52 which is minimized in length.

Meanwhile, the breather tube 48 is formed to be larger in diameter than the rubber hose 52 while having the curved part 48a curved so as to bulge upwards on the upper side of the oil supply pipe 31, one end of the breather tube 48 is connected to the fuel tank 28 so as to guide the air present inside the fuel tank 28, and the other end of the breather tube 48 is connected to an upper surface of the oil supply pipe 32 at a position below the connected part where the rubber hose 52 is connected to the oil supply pipe 31. Therefore, air present inside the fuel tank 28, in which air is present in a larger amount than that in the main pipe 14, can be favorably discharged through the breather tube 48, whereby the efficiency of injection of the fuel into the fuel tank 28 can be enhanced. In addition, since the atomized fuel is guided into the oil supply pipe 31 at a position above the oil supply gun inserted in the oil supply pipe 31, it can be made difficult for the automatic stop sensor to operate, it can hence be made difficult for automatic stopping to occur, and work efficiency at the oil supply time can be enhanced.

Moreover, since the breather tube 48 is laid out so as to pass through the region surrounded by the main pipe 14, the oil supply pipe 31 and the rubber hose 52, the breather tube 48 can be protected by surrounding it with the main pipe 14, the oil supply pipe 31 and the rubber hose 52. In addition, by effective arrangement of the breather tube 48 in the space surrounded by the main pipe 14, the oil supply pipe 31 and the rubber hose 52, the breather tube 48 can be prevented from being entangled with the rubber hose 52.

Furthermore, since the breather tube 48 is laid along the main pipe 14 on the side of the oil supply pipe 31 with respect to the vertical plane PL containing the axes of the head pipe 13 and the main pipe 14, the fuel system can be collectively arranged on one of the left and right sides of the main pipe 14, whereby maintainability can be enhanced.

Meanwhile, the fuel discharge port 53 for discharging the overflow fuel coming from the oil supply pipe 31 is provided in the oil supply pipe 31 at substantially the same height as the connected part where the rubber hose 52 is connected to the oil supply pipe 32, and the overflow tube 55 is connected to the fuel discharge port 53. Therefore, an overflow mechanism can be arranged at the oil supply pipe 32 being made less susceptible to the influence of the rubber hose 52 and the breather tube 48, so that it is possible to permit the overflow mechanism to function securely.

In addition, since the overflow tube 55 is laid so as to pass on the inside of the curved part 48a of the breather tube 48, the overflow tube 55 can be laid in an unoccupied space on the inside of the curved part 48a of the breather tube 48 so as not to be entangled with the breather tube 48.

Furthermore, the main switch 43 is disposed on the right side of the main pipe 14, while the oil supply pipe 31 is disposed on the left side of the main pipe 14 and is connected to a left side surface of the main pipe 14. Therefore, the oil supply pipe 31 can be disposed at such a position as not to be influenced by the layout or operation of the main switch 43, whereby efficiency of oil supplying work can be enhanced.

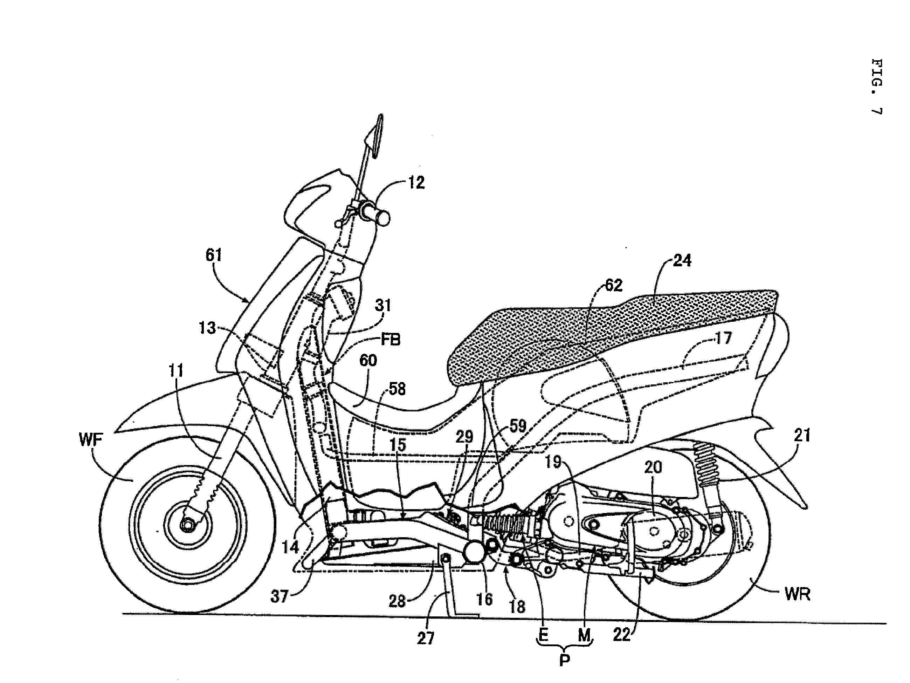

FIG. 7 shows a second embodiment of the present invention, wherein the parts corresponding to those in the first embodiment above are only denoted by the same reference symbols as used above, and detailed description of them are omitted.

A body frame FB of a motorcycle of the motor scooter type includes: a head pipe 13 steerably supporting a front fork 11 and a steering handle 12; a hollow main pipe 14 extending rearwardly downwards from the head pipe 13; a left-right pair of lower frames 15 ... each connected to a lower part of the main pipe 14 and extending rearwards; a cross pipe 16 connecting rear end parts of both the lower frames 15 ... to each other; a left-right pair of rear frame pipes 17 ... continuous with both end parts of the cross member 16 at the front ends thereof; and upper frames 58 ... connecting an intermediate part of the main pipe 14 and intermediate parts of both the rear frame pipes 17 ... to each other.

A fuel tank 28 is disposed in a region surrounded by the main pipe 14, both the lower frames 15 ... and the cross pipe 16 of the body frame FB, and a plurality of portions of the fuel tank 28 which are located at intervals along the circumferential direction are supported by both the lower frames 15 ... In addition, a pump unit 29 for supplying an engine E of a power unit P with a fuel contained in the fuel tank 28 is disposed at a rear part of the fuel tank 28. Incidentally, an oil supply structure for the fuel tank 28 is configured in the same manner as in the first embodiment.

A part of the engine E and the body frame FB are covered with a body cover 61 having a left-right pair of step floors 59 ... on which to put the feet of the rider seated on a riders' seat 24 and a floor tunnel part 60 upwardly protuberant between both the step floors 59 ..., between the drivers' seat 24 and the head pipe 13. The floor tunnel part 60 is supported by the left-right pair of upper frames 58 ...

Furthermore, a luggage box 62 extending from the lower side of the riders' seat 24 to the floor tunnel part 60 is disposed inside the body cover 61, and a front part of the luggage box 62 is disposed on the upper side of the fuel tank 28.

The second embodiment, also, can produce the same effects as those of the first embodiment.

While the embodiments of the present invention have been described above, the invention is not limited to the embodiments, and various design modifications can be made within the scope of the invention as set forth in the claims.

### Description of Reference Symbols

11: Front fork
12: Steering handle
13: Head pipe
14: Main pipe
15: Lower frame as frame member
27: Side stand
28: Fuel tank
30: Fuel passage
31: Oil supply pipe
32: Upper connecting tube
34: Lower connecting tube
35: Plug as closing member
36: Reinforcing member
37: Cross member
42: Accelerator cable
43: Main switch
44: Wire harness
46: Air vent
48: Breather tube as air vent conduit
48a: Curved part
50: Air vent
52: Rubber hose as communicating pipe
53: Fuel discharge port
55: Overflow tube
FA, FB: Body frame
PL: Vertical plane

## Claims

1. A fuel oil supply structure for a small-type vehicle comprising: a body frame (FA, FB) which includes a head pipe (13) for steerably supporting a steering handle (12) and a front fork (11), and a hollow main pipe (14) extending rearwardly downwards from said head pipe (13) and forming a fuel passage (30) at least at a part thereof; an oil supply pipe (31) for supplying a fuel into said fuel passage (30), said oil supply pipe (31) being connected to said main pipe (14); and a fuel tank (28) supplied with said fuel from said oil supply pipe (31) through said fuel passage (30), said fuel tank (28) being connected to a lower part of said main pipe (14),
**characterized in that**
one end of a flexible lower connecting tube (34) is connected to said main pipe (14) so as to communicate with said fuel passage (30), and the other end of said lower connecting tube (34) is connected to said fuel tank (28),
wherein a lower part of said main pipe (14) is closed with a closing member (35) which determines the lower end position of said fuel passage (30), and said one end of said lower connecting tube (34) is connected to a side surface of said main pipe (14) at a position above said closing member (35).

2. The fuel oil supply structure for the small-type vehicle as set forth in claim 1, wherein said other end of said lower connecting tube (34) is connected to an upper surface of said fuel tank (28) at a position below a connected part where said lower connecting tube (34) is connected to said main pipe (14).

3. The fuel oil supply structure for the small-type vehicle as set forth in claim 1 or 2, wherein said lower connecting tube (34) is disposed to be bent in plan view so that a connected part where said other end of said lower connecting tube (34) is connected to said fuel tank (28) is disposed with an offset to one of the left and right sides in relation to a connected part where said one end of said lower connecting tube (34) is connected to said main pipe (14).

4. The fuel oil supply structure for the small-type vehicle as set forth in claim 3, wherein a side stand (27) is disposed on one of the left and right sides of said body frame (FA, FB), and the connected part where said lower connecting tube (34) is connected to said fuel tank (28) is disposed with an offset to the side of said side stand (27) with respect to the connected part where said lower connecting tube (34) is connected to said main pipe (14).

5. The fuel oil supply structure for the small-type vehicle as set forth in any of claims 1 to 4, wherein one end of a flexible upper connecting tube (32) is connected to said oil supply pipe (31), and the other end of said upper connecting tube (32) is connected to said main pipe (14) so as to communicate with said fuel passage (30).

6. The fuel oil supply structure for the small-type vehicle as set forth in any of claims 1 to 5, wherein said oil supply pipe (31) is disposed to be deviated to one of the left and right sides in relation to the axis of said main pipe (14).

7. The fuel oil supply structure for the small-type vehicle as set forth in claim 6, wherein an accelerator cable (42) is laid along said main pipe (14) on the side of said oil supply pipe (31) with respect to a vertical plane (PL) containing the axis of said main pipe (14), whereas, on the side opposite of said oil supply pipe (31) and said accelerator cable (42) with respect to said vertical plane (PL), a main switch (43) is disposed, and a wire harness (44) is laid along said main pipe (14).

8. The fuel oil supply structure for the small-type vehicle as set forth in any of claims 1 to 7, wherein a side stand (27) is disposed on one of the left and right sides of said body frame (FA, FB), an air vent (46) is provided at an upper surface of said fuel tank (28) on the side opposite to the side of said side stand (27) with respect to a vertical plane (PL) containing the axis of said main pipe (14), and an air vent conduit (48) connected at one end thereof to said air vent (46) is connected at the other end thereof to said oil supply pipe (31).

9. The fuel oil supply structure for the small-type vehicle as set forth in claim 8, wherein said air vent conduit (48) is laid along said main pipe (14) on the side of said oil supply pipe (31) with respect to said vertical plane (PL) containing the axis of said main pipe (14).

10. The fuel oil supply structure for the small-type vehicle as set forth in claims 1 to 9, the vehicle further comprising frame members (15) each connected to said main pipe (14) at a front part thereof and extending rearwards, wherein a lower part of said main pipe (14) is closed at a position spaced upwards from the lower end of said main pipe (14) by a closing member (35) which determines the lower end position of said fuel passage (30), a connecting tube (34) connected to said main pipe (14) at one end thereof so as to communicate with said fuel passage (30) at a position above said closing member (35) is connected to said fuel tank (28) at the other end thereof, and front parts of said frame members (15) are each welded to said main pipe (14) at a position below said closing member (35).

11. The fuel oil supply structure for the small-type vehicle as set forth in claim 10, wherein the front ends of front parts of a left-right pair of said frame members (15) are welded to both sides of said main pipe (14) at positions below said closing member (35), and a left-right pair of reinforcing members (36) are provided between front parts of both said frame members (15) and said main pipe (14).

12. The fuel oil supply structure for the small-type vehicle as set forth in claim 11, wherein said one end of said connecting tube (34) is connected to a rear surface of said main pipe (14) between both said reinforcing members (36).

13. The fuel oil supply structure for the small-type vehicle as set forth in any of claims 10 to 12, wherein a cross member (37) passing on the front side of a lower part of said main pipe (14) in side view is provided between front parts of both said frame members (15).

14. The fuel oil supply structure for the small-type vehicle as set forth in any of claims 10 to 13, wherein said oil supply pipe (31) is disposed to be deviated to one of the left and right sides in relation to the axis of said main pipe (14).

15. The fuel oil supply structure for the small-type vehicle as set forth in any of claims 1 to 14, wherein an air vent (50) is provided at said main pipe (14) at a position above a connected part where said oil supply pipe (31) is connected to said main pipe (14).

16. The fuel oil supply structure for the small-type vehicle as set forth in claim 15, wherein said air vent (50) is connected to said oil supply pipe (31) through a communicating pipe (52).

17. The fuel oil supply structure for the small-type vehicle as set forth in claim 16, wherein said oil supply pipe (31) is connected to said main pipe (14) in such a manner that the upper end thereof is located above the upper end of said head pipe (13), and said communicating pipe (52) is connected to said oil supply pipe (31) at a position above the upper end of said head pipe (13).

18. The fuel oil supply structure for the small-type vehicle as set forth in claim 16 or 17, wherein said oil supply pipe (31) is connected to said main pipe (14) through a flexible connecting tube (32) disposed on one of the left and right sides of a vertical plane (PL) containing the axis of said main pipe (14), and said communicating pipe (52) is connected to said oil supply pipe (31) at a position near said vertical plane (PL).

19. The fuel oil supply structure for the small-type vehicle as set forth in any of claims 16 to 18, wherein one end of a breather tube (48) formed to be larger in diameter than said communicating pipe (52) while having a curved part (48a) so curved as to bulge upwards on the upper side of said oil supply pipe (31) is connected to said fuel tank (28) so as to guide the air present in said fuel tank (28), and the other end of said breather tube (48) is connected to an upper surface of said oil supply pipe (31) at a position below a connected part where said communicating pipe (52) is connected to said oil supply pipe (31).

20. The fuel oil supply structure for the small-type vehicle as set forth in claim 19, wherein said breather tube (48) is so laid as to pass through a region surrounded by said main pipe (14), said oil supply pipe (31) and said communicating pipe (52).

21. The fuel oil supply structure for the small-type vehicle as set forth in claim 19 or 20, wherein a fuel discharge port (53) for discharging an overflow fuel coming from said oil supply pipe (31) is provided at said oil supply pipe (31) at substantially the same height as a connected part where said communicating pipe (52) is connected to said oil supply pipe (31), and an overflow tube (55) is connected to said fuel discharge port (53).

22. The fuel oil supply structure for the small-type vehicle as set forth in any of claims 19 to 21, wherein an overflow tube (55) is so laid as to pass on the inner side of said curved part (48a) of said breather tube (48).

23. The fuel oil supply structure for the small-type vehicle as set forth in any of claims 18 to 22, wherein a main switch (43) is disposed on the right side of said main pipe (14), while said oil supply pipe (31) is disposed on the left side of said main pipe (14) and is connected to a left side surface of said main pipe (14).

## Patentansprüche

1. Kraftstoffölversorgungsstruktur für ein kleines Fahrzeug, die aufweist: einen Karosserierahmen (FA, FB), der ein Kopfrohr (13) zum lenkbaren Halten eines Lenkergriffs (12) und einer Vordergabel (11) umfasst, und ein hohles Hauptrohr (13), das sich von dem Kopfrohr (13) nach hinten abwärts erstreckt und wenigstens in einem Teil von ihm einen Kraftstoffdurchgang (30) bildet; ein Ölzuführungsrohr (31) zum Zuführen eines Kraftstoffs in den Kraftstoffdurchgang (30), wobei das Ölzuführungsrohr (31) mit dem Hauptrohr (14) verbunden ist; und einen Kraftstoffbehälter (28), der von dem Ölzuführungsrohr (31) durch den Kraftstoffdurchgang (30) mit dem Kraftsoff versorgt wird, wobei der Kraftstoffbehälter (28) mit einem unteren Teil des Hauptrohrs (14) verbunden ist, **dadurch gekennzeichnet, dass**
ein Ende eines flexiblen unteren Verbindungsrohrs (34) mit dem Hauptrohr (14) verbunden ist, um mit dem Kraftstoffdurchgang (30) in Verbindung zu stehen, und das andere Ende des unteren Verbindungsrohrs (34) mit dem Kraftstoffbehälter (28) verbunden ist,
wobei ein unterer Teil des Hauptrohrs (14) mit einem Verschlusselement (35) verschlossen ist, das die untere Endposition des Kraftstoffdurchgangs (30) bestimmt, und das eine Ende des unteren Verbindungsrohrs (34) an einer Position oberhalb des Verschlusselements (35) mit einer Seitenoberfläche des Hautrohrs (14) verbunden ist.

2. Kraftstoffölversorgungsstruktur für das kleine Fahrzeug nach Anspruch 1, wobei das andere Ende des unteren Verbindungsrohrs (34) an einer Position unterhalb eines verbundenen Teils, wo das untere Verbindungsrohr (34) mit dem Hauptrohr (14) verbunden ist, mit einer oberen Oberfläche des Kraftstoffbehälters (28) verbunden ist.

3. Kraftstoffölversorgungsstruktur für das kleine Fahrzeug nach Anspruch 1 oder 2, wobei das untere Verbindungsrohr (34) derart angeordnet ist, dass es in der Draufsicht gekrümmt ist, so dass ein verbundener Teil, wo das andere Ende des unteren Verbindungsrohrs (34) mit dem Kraftstoffbehälter (28) verbunden ist, mit einem Versatz zu einer der linken und rechten Seiten in Bezug zu einem verbundenen Teil, wo das eine Ende des unteren Verbindungsrohrs (34) mit dem Hauptrohr (14) verbunden ist, angeordnet ist.

4. Kraftstoffölversorgungsstruktur für das kleine Fahrzeug nach Anspruch 3, wobei ein Seitenständer (27) auf einer der linken und rechten Seiten des Karosserierahmens (FA, FB) angeordnet ist und der verbundene Teil, wo das untere Verbindungsrohr (34) mit dem Kraftstoffbehälter (28) verbunden ist, in Bezug auf den verbundenen Teil, wo das untere Verbindungsrohr (34) mit dem Hauptrohr (14) verbunden ist, mit einem Versatz angeordnet ist.

5. Kraftstoffölversorgungsstruktur für das kleine Fahrzeug nach einem der Ansprüche 1 bis 4, wobei ein Ende eines flexiblen oberen Verbindungsrohrs (32) mit dem Ölzuführungsrohr (31) verbunden ist und das andere Ende des oberen Verbindungsrohrs (32) mit dem Hauptrohr (14) verbunden ist, um mit dem Kraftstoffdurchgang (30) in Verbindung zu stehen.

6. Kraftstoffölversorgungsstruktur für das kleine Fahrzeug nach einem der Ansprüche 1 bis 5, wobei das Ölzuführungsrohr (31) derart angeordnet ist, dass es in Bezug auf das Hauptrohr (14) auf eine der linken und rechten Seiten abgelenkt ist.

7. Kraftstoffölversorgungsstruktur für das kleine Fahrzeug nach Anspruch 6, wobei ein Gashebelkabel (42) entlang des Hauptrohrs (14) auf der Seite des Ölzuführungsrohrs (31) in Bezug auf eine Vertikalebene (PL), welche die Achse des Hauptrohrs (14) enthält, verlegt ist, während auf der Seite entgegengesetzt zu dem Ölzuführungsrohr (31) und dem Gashebelkabel (42) in Bezug auf die Vertikalebene (PL) ein Hauptschalter (43) angeordnet ist und ein Kabelbaum (44) entlang des Hauptrohrs (14) verlegt ist.

8. Kraftstoffölversorgungsstruktur für das kleine Fahrzeug nach einem der Ansprüche 1 bis 7, wobei ein Seitenständer (27) auf einer der linken und rechten Seiten des Karosserierahmens (FA, FB) angeordnet ist, eine Entlüftung (46) an einer oberen Oberfläche des Kraftstoffbehälters (28) auf der Seite entgegengesetzt zu der Seite des Seitenständers (27) in Bezug auf eine Vertikalebene (PL), welche die Achse des Hauptrohrs (14) enthält, bereitgestellt ist, und ein Entlüftungskanal (48), der an einem seiner Enden mit der Entlüftung (46) verbunden ist, an seinem anderen Ende mit dem Ölzuführungsrohr (31) verbunden ist.

9. Kraftstoffölversorgungsstruktur für das kleine Fahrzeug nach Anspruch 8, wobei der Entlüftungskanal (48) entlang des Hauptrohrs (14) auf der Seite des Ölzuführungsrohrs (31) in Bezug auf die Vertikalebene (PL), welche die Achse des Hauptrohrs (14) enthält, verlegt ist.

10. Kraftstoffölversorgungsstruktur für das kleine Fahrzeug nach einem der Ansprüche 1 bis 9, wobei das Fahrzeug ferner Rahmenelemente (15) aufweist, die jeweils in seinem vorderen Teil mit dem Hauptrohr (14) verbunden sind und sich nach hinten erstrecken, wobei ein unterer Teil des Hauptrohrs (14) an einer Position, die nach oben von dem unteren Ende des Hauptrohrs (14) beabstandet ist, durch ein Verschlusselement (35), das die untere Endposition des Kraftstoffdurchgangs (30) bestimmt, verschlossen ist, wobei ein Verbindungsrohr (34), das an seinem einen Ende an einer Position oberhalb des Verschlusselements (35) mit dem Hauptrohr (14) verbunden ist, um mit dem Kraftstoffdurchgang (30) in Verbindung zu stehen, an seinem anderen Ende mit dem Kraftstoffbehälter (28) verbunden ist und vordere Teile der Rahmenelemente (15) jeweils an einer Position unterhalb des Verschlusselements (35) an das Hauptrohr (14) geschweißt sind.

11. Kraftstoffölversorgungsstruktur für das kleine Fahrzeug nach Anspruch 10, wobei die vorderen Enden von vorderen Teilen eines Links-Rechts-Paars der Rahmenelemente (15) an Positionen unterhalb des Verschlusselements (35) an beide Seiten des Hauptrohrs (14) geschweißt sind und ein Links-Rechts-Paar der Verstärkungselemente (36) zwischen vorderen Teilen beider Rahmenelement (15) und dem Hauptrohr (14) bereitgestellt sind.

12. Kraftstoffölversorgungsstruktur für das kleine Fahrzeug nach Anspruch 11, wobei das eine Ende des Verbindungsrohrs (34) zwischen den beiden Verstärkungselementen (36) mit einer hinteren Oberfläche des Hauptrohrs (14) verbunden ist.

13. Kraftstoffölversorgungsstruktur für das kleine Fahrzeug nach einem der Ansprüche 10 bis 12, wobei ein Querelement (37), das in der Seitenansicht auf der Vorderseite eines unteren Teils des Hauptrohrs (14) vorbeigeht, zwischen den vorderen Teilen der beiden Rahmenelemente (15) bereitgestellt ist.

14. Kraftstoffölversorgungsstruktur für das kleine Fahrzeug nach einem der Ansprüche 10 bis 13, wobei das Ölzuführungsrohr (31) derart angeordnet ist, dass es in Bezug auf die Achse des Hauptrohrs (14) auf eine der linken und rechten Seiten abgelenkt ist.

15. Kraftstoffölversorgungsstruktur für das kleine Fahrzeug nach einem der Ansprüche 1 bis 14, wobei an einer Position oberhalb eines verbundenen Teils, wo das Ölzuführungsrohr (31) mit dem Hauptrohr (14) verbunden ist, eine Entlüftung (50) an dem Hauptrohr (14) bereitgestellt ist.

16. Kraftstoffölversorgungsstruktur für das kleine Fahrzeug nach Anspruch 15, wobei die Entlüftung (50) durch ein Verbindungsrohr (52) mit dem Ölzuführungsrohr (31) verbunden ist.

17. Kraftstoffölversorgungsstruktur für das kleine Fahrzeug nach Anspruch 16, wobei das Ölzuführungsrohr (31) in einer derartigen Weise mit dem Hauptrohr (14) verbunden ist, dass sein oberes Ende sich oberhalb des oberen Endes des Kopfrohrs (13) befindet, und das Verbindungsrohr (52) an einer Position oberhalb des oberen Endes des Kopfrohrs (13) mit dem Ölzuführungsrohr (31) verbunden ist.

18. Kraftstoffölversorgungsstruktur für das kleine Fahrzeug nach Anspruch 16 oder 17, wobei das Ölzuführungsrohr (31) durch ein flexibles Verbindungsrohr (32), das auf einer der linken und rechten Seiten einer Vertikalebene (PL), welche die Achse des Hauptrohrs (14) enthält, angeordnet ist, mit dem Hauptrohr (14) verbunden ist, und das Verbindungsrohr (52) an einer Position nahe der Vertikalebene (PL) mit dem Ölzuführungsrohr (31) verbunden ist.

19. Kraftstoffölversorgungsstruktur für das kleine Fahrzeug nach einem der Ansprüche 16 bis 18, wobei ein Ende eines Entlüftungsrohrs (48), das mit einem größeren Durchmesser als das Verbindungsrohr (52) ausgebildet ist, während es einen gekrümmten Teil (48a) hat, der derart gekrümmt ist, dass er auf der Oberseite des Ölzuführungsrohrs (31) nach oben gewölbt ist, mit dem Kraftstoffbehälter (28) verbunden ist, um die in dem Kraftstoffbehälter (28) vorhandene Luft zu leiten, und wobei das andere Ende des Entlüftungsrohrs (48) an einer Position unterhalb eines verbundenen Teils, wo das Verbindungsrohr (52) mit dem Ölzuführungsrohr (31) verbunden ist, mit einer oberen Oberfläche des Ölzuführungsrohrs (31) verbunden ist.

20. Kraftstoffölversorgungsstruktur für das kleine Fahrzeug nach Anspruch 19, wobei das Entlüftungsrohr (48) derart verlegt ist, dass es durch einen Bereich geht, der von dem Hauptrohr (14), dem Ölzuführungsrohr (31) und dem Verbindungsrohr (52) umgeben ist.

21. Kraftstoffölversorgungsstruktur für das kleine Fahrzeug nach Anspruch 19 oder 20, wobei eine Kraftstoffabgabeöffnung (53) zum Abgeben eines Überlaufkraftstoffs, der von dem Ölzuführungsrohr (31) kommt, im Wesentlichen auf der gleichen Höhe wie ein verbundener Teil, wo das Verbindungsrohr (52) mit dem Ölzuführungsrohr (31) verbunden ist, an dem Ölzuführungsrohr (31) bereitgestellt ist und ein Überlaufrohr (55) mit der Kraftstoffabgabeöffnung (53) verbunden ist.

22. Kraftstoffölversorgungsstruktur für das kleine Fahrzeug nach einem der Ansprüche 19 bis 21, wobei ein Überlaufrohr (55) derart verlegt ist, dass es auf der Innenseite des gekrümmten Teils (48a) des Entlüftungsrohrs (48) vorbeigeht.

23. Kraftstoffölversorgungsstruktur für das kleine Fahrzeug nach einem der Ansprüche 18 bis 22, wobei ein Hauptschalter (43) auf der rechten Seite des Hauptrohrs (14) bereitgestellt ist, während das Ölzuführungsrohr (31) auf der linken Seite des Hauptrohrs (14) bereitgestellt ist und mit einer linken Seitenoberfläche des Hauptrohrs (14) verbunden ist.

## Revendications

1. Structure d'alimentation en carburant - huile pour un véhicule de petite taille comprenant : un châssis (FA, FB) qui comprend un tube de direction (13) pour supporter, de manière orientable, un guidon de direction (12) et une fourche avant (11) et un tuyau principal creux (14) s'étendant vers l'arrière vers le bas à partir dudit tube de direction (13) et formant un passage de carburant (30) au moins au niveau de l'une de ses parties ; un tuyau d'alimentation en huile (31) pour amener un carburant dans ledit passage de carburant (30), ledit tuyau d'alimentation en huile (31) étant raccordé audit tuyau principal (14) ; et un réservoir de carburant (28) alimenté avec ledit carburant provenant dudit tuyau d'alimentation en huile (31) par ledit passage de carburant (30), ledit réservoir de carburant (28) étant raccordé à une partie inférieure dudit tuyau principal (14),
**caractérisée en ce que** :
une extrémité d'un tube de raccordement inférieur souple (34) est raccordée audit tuyau principal (14) afin de communiquer avec ledit passage de carburant (30) et l'autre extrémité dudit tube de raccordement inférieur (34) est raccordée audit réservoir de carburant (28),
dans laquelle une partie inférieure dudit tuyau principal (14) est fermée avec un élément de fermeture (35) qui détermine la position d'extrémité inférieure dudit passage de carburant (30) et ladite une extrémité dudit tube de raccordement inférieur (34) est raccordée à une surface latérale dudit tuyau principal (14) dans une position située au-dessus dudit élément de fermeture (35).

2. Structure d'alimentation en carburant - huile pour un véhicule de petite taille selon la revendication 1, dans laquelle ladite autre extrémité dudit tube de raccordement inférieur (34) est raccordée à une surface supérieure dudit réservoir de carburant (28) dans une position située au-dessous d'une partie raccordée à l'endroit où ledit tube de raccordement inférieur (34) est raccordé audit tuyau principal (14).

3. Structure d'alimentation en carburant - huile pour un véhicule de petite taille selon la revendication 1 ou 2, dans laquelle ledit tube de raccordement inférieur (34) est disposé pour être plié, sur une vue en plan, de sorte qu'une partie raccordée à l'endroit où ladite autre extrémité dudit tube de raccordement inférieur (34) est raccordée audit réservoir de carburant (28), est disposée avec un décalage par rapport à l'un des côtés gauche et droit par rapport à une partie raccordée à l'endroit où ladite une extrémité dudit tube de raccordement inférieur (34) est raccordée audit tuyau principal (14).

4. Structure d'alimentation en carburant - huile pour un véhicule de petite taille selon la revendication 3, dans laquelle un support latéral (27) est disposé sur l'un des côtés gauche et droit dudit châssis (FA, FB), et la partie raccordée à l'endroit où ledit tube de raccordement inférieur (34) est raccordé audit réservoir de carburant (28), est disposée avec un décalage sur le côté dudit support latéral (27) par rapport à la partie raccordée à l'endroit où ledit tube de raccordement inférieur (34) est raccordé audit tuyau principal (14).

5. Structure d'alimentation en carburant - huile pour un véhicule de petite taille selon l'une quelconque des revendications 1 à 4, dans laquelle une extrémité d'un tube de raccordement supérieur souple (32) est raccordée audit tuyau d'alimentation en huile (31) et l'autre extrémité dudit tube de raccordement supérieur (32) est raccordée audit tuyau principal (14) afin de communiquer avec ledit passage de carburant (30).

6. Structure d'alimentation en carburant - huile pour un véhicule de petite taille selon l'une quelconque des revendications 1 à 5, dans laquelle ledit tuyau d'alimentation en huile (31) est disposé pour être dévié vers l'un des côtés gauche et droit par rapport à l'axe dudit tuyau principal (14).

7. Structure d'alimentation en carburant - huile pour un véhicule de petite taille selon la revendication 6, dans laquelle un câble d'accélérateur (42) est posé le long dudit tuyau principal (14) sur le côté dudit tuyau d'alimentation en huile (31) par rapport à un plan vertical (PL) contenant l'axe dudit tuyau principal (14), alors que, sur le côté opposé dudit tuyau d'alimentation en huile (31) et dudit câble d'accélérateur (42) par rapport audit plan vertical (PL), on dispose un commutateur principal (43) et un faisceau électrique (44) est posé le long dudit tuyau principal (14).

8. Structure d'alimentation en carburant - huile pour un véhicule de petite taille selon l'une quelconque des revendications 1 à 7, dans laquelle un support latéral (27) est disposé sur l'un des côtés gauche et droit dudit châssis (FA, FB), un évent (46) est prévu au niveau d'une surface supérieure dudit réservoir de carburant (28) sur le côté opposé au côté dudit support latéral (27) par rapport à un plan vertical (PL) contenant l'axe dudit tuyau principal (14), et un conduit d'évent (48) raccordé, au niveau de son extrémité, audit évent (46), est raccordé au niveau de son autre extrémité, audit tuyau d'alimentation en huile (31).

9. Structure d'alimentation en carburant - huile pour un véhicule de petite taille selon la revendication 8, dans lequel ledit conduit d'évent (48) est posé le long dudit tuyau principal (14) sur le côté dudit tuyau d'alimentation en huile (31) par rapport audit plan vertical (PL) contenant l'axe dudit tuyau principal (14).

10. Structure d'alimentation en carburant - huile pour un véhicule de petite taille selon les revendications 1 à 9, le véhicule comprenant en outre des éléments de cadre (15) chacun raccordés audit tuyau principal (14) au niveau de sa partie avant et s'étendant vers l'arrière, dans laquelle une partie inférieure dudit tuyau principal (14) est fermée dans une position espacée vers le haut à partir de l'extrémité inférieure dudit tuyau principal (14) par un élément de fermeture (35) qui détermine la position d'extrémité inférieure dudit passage de carburant (30), un tube de raccordement (34) raccordé audit tuyau principal (14) au niveau de son extrémité afin de communiquer avec ledit passage de carburant (30) dans une position au-dessus dudit élément de fermeture (35), est raccordé audit réservoir de carburant (28) au niveau de son autre extrémité, et des parties avant desdits éléments de cadre (15) sont chacune soudées audit tuyau principal (14) dans une position située au-dessous dudit élément de fermeture (35).

11. Structure d'alimentation en carburant - huile pour un véhicule de petite taille selon la revendication 10, dans laquelle les extrémités avant des parties avant d'une paire gauche - droite desdits éléments de cadre (15) sont soudées aux deux côtés dudit tuyau principal (14) dans des positions situées au-dessous dudit élément de fermeture (35), et comprenant une paire gauche - droite d'éléments de renforcement (36) entre les parties avant à la fois desdits éléments de cadre (15) et dudit tuyau principal (14).

12. Structure d'alimentation en carburant - huile pour un véhicule de petite taille selon la revendication 11, dans laquelle ladite une extrémité dudit tube de raccordement (34) est raccordée à une surface arrière dudit tuyau principal (14) entre deux desdits éléments de renforcement (36).

13. Structure d'alimentation en carburant - huile pour un véhicule de petite taille selon l'une quelconque des revendications 10 à 12, dans laquelle une traverse (37) passant sur le côté avant d'une partie inférieure dudit tuyau principal (14) sur la vue latérale, est prévue entre des parties avant des deux éléments de cadre (15) précités.

14. Structure d'alimentation en carburant - huile pour un véhicule de petite taille selon l'une quelconque des revendications 10 à 13, dans laquelle ledit tuyau d'alimentation en huile (31) est disposé pour être dévié vers l'un parmi les côtés gauche et droit par rapport à l'axe dudit tuyau principal (14).

15. Structure d'alimentation en carburant - huile pour un véhicule de petite taille selon l'une quelconque des revendications 1 à 14, dans laquelle un évent (50) est prévu au niveau dudit tuyau principal (14) dans une position située au-dessus d'une partie raccordée où ledit tuyau d'alimentation en huile (31) est raccordé audit tuyau principal (14).

16. Structure d'alimentation en carburant - huile pour un véhicule de petite taille selon la revendication 15, dans laquelle ledit évent (50) est raccordé audit tuyau d'alimentation en huile (31) par le biais d'un tuyau de communication (52).

17. Structure d'alimentation en carburant - huile pour un véhicule de petite taille selon la revendication 16, dans laquelle ledit tuyau d'alimentation en huile (31) est raccordé audit tuyau principal (14) de sorte que son extrémité supérieure est positionnée au-dessus de l'extrémité supérieure dudit tube de direction (13), et ledit tuyau de communication (52) est raccordé audit tuyau d'alimentation en huile (31) dans une position située au-dessus de l'extrémité supérieure dudit tube de direction (13).

18. Structure d'alimentation en carburant - huile pour un véhicule de petite taille selon la revendication 16 ou 17, dans laquelle ledit tuyau d'alimentation en huile (31) est raccordé audit tuyau principal (14) par le biais d'un tube de raccordement souple (32) disposé sur l'un des côtés gauche et droit d'un plan vertical (PL) contenant l'axe dudit tuyau principal (14) et ledit tuyau de communication (52) est raccordé audit tuyau d'alimentation en huile (31) dans une position située à proximité dudit plan vertical (PL).

19. Structure d'alimentation en carburant - huile pour un véhicule dé petite taille selon l'une quelconque des revendications 16 à 18, dans laquelle une extrémité d'un tube de reniflard (48) formée pour être plus grande du point de vue du diamètre que ledit tuyau de communication (52) tout en ayant une partie incurvée (48a), incurvée afin de se renfler vers le haut sur le côté supérieur dudit tuyau d'alimentation en huile (31), est raccordée audit réservoir de carburant (28) afin de guider l'air présent dans ledit réservoir de carburant (28), et l'autre extrémité dudit tube de reniflard (48) est raccordée à une surface supérieure dudit tuyau d'alimentation en huile (31) dans une position située au-dessous d'une partie raccordée à l'endroit où ledit tuyau de communication (52) est raccordé audit tuyau d'alimentation en huile (31).

20. Structure d'alimentation en carburant - huile pour un véhicule de petite taille selon la revendication 19, dans laquelle ledit tube de reniflard (48) est posé afin de passer à travers une région entourée par ledit tuyau principal (14), ledit tuyau d'alimentation en huile (31) et ledit tuyau de communication (52).

21. Structure d'alimentation en carburant - huile pour un véhicule de petite taille selon la revendication 19 ou 20, dans laquelle un orifice de décharge de carburant (53) pour décharger un carburant excédentaire provenant dudit tuyau d'alimentation en huile (31) est prévu au niveau dudit tuyau d'alimentation en huile (31) sensiblement à la même hauteur qu'une partie raccordée à l'endroit où ledit tuyau de communication (52) est raccordé audit tuyau d'alimentation en huile (31), et un tube de trop-plein (55) est raccordé audit orifice de décharge de carburant (53).

22. Structure d'alimentation en carburant - huile pour un véhicule de petite taille selon l'une quelconque des revendications 19 à 21, dans laquelle un tube de trop-plein (55) est posé afin de passer sur le côté interne de ladite partie incurvée (48a) dudit tube de reniflard (48).

23. Structure d'alimentation en carburant - huile pour un véhicule de petite taille selon l'une quelconque des revendications 18 à 22, dans laquelle un commutateur principal (43) est disposé sur le côté droit dudit tuyau principal (14), alors que ledit tuyau d'alimentation en huile (31) est disposé du côté gauche dudit tuyau principal (14) et est raccordé à une surface latérale gauche dudit tuyau principal (14).
